## Europäisches Patentamt

## European Patent Office

## Office européen des brevets

(11) Veröffentlichungsnummer : **0 198 315**
**B1**

(12) **EUROPÄISCHE PATENTSCHRIFT**

(45) Veröffentlichungstag der Patentschrift :
15.03.89

(51) Int. Cl.⁴ : **B 25 J   9/04**

(21) Anmeldenummer : 86104432.9

(22) Anmeldetag : 01.04.86

(54) Industrieroboter mit Schwenkarm.

(30) Priorität : 16.04.85 DE 3513705

(43) Veröffentlichungstag der Anmeldung :
22.10.86 Patentblatt 86/43

(45) Bekanntmachung des Hinweises auf die Patenterteilung : 15.03.89 Patentblatt 89/11

(84) Benannte Vertragsstaaten :
DE FR IT SE

(56) Entgegenhaltungen :
EP--A-- 0 096 634
EP--A-- 0 102 082
EP--A-- 0 105 069
GB--A-- 2 134 074

(73) Patentinhaber : **Siemens Aktiengesellschaft Berlin
und München**
**Wittelsbacherplatz 2**
**D-8000 München 2 (DE)**

(72) Erfinder : **Eberle, Manfred**
**Würzburger Ring 70**
**D-8520 Erlangen (DE)**
Erfinder : **Keppler Rainer**
**Gartenstrasse 24**
**D-8523 Baiersdorf (DE)**
Erfinder : **Köslich, Bernd**
**Bussardweg 2**
**D-8522 Herzogenaurach-Niederndorf (DE)**

## Beschreibung

Industrieroboter mit Schwenkarm, bei dem,

a) zwei aufeinanderfolgende Armteile zueinander in parallelen Horizontalebenen schwenkbar sind und

b) zum Antrieb in einzelnen Roboterachsen Elektromotoren mit Getrieben vorgesehen sind.

Schwenkarmroboter sind in den verschiedensten Ausführungsformen bekannt, z. B. durch die US-A-43 48 142 (Figur 1). Bei dieser bekannten Anordnung sind die beiden Armteile über ein Drehgelenk miteinander verbunden und beide Armteile relativ zueinander in der gleichen Horizontalebene gegeneinander verschwenkbar.

Zum Antrieb der einzelnen Gelenke werden in vielen Fällen in die Gelenke integrierte Elektromotoren mit Getrieben benutzt, wie beispielsweise aus der DE-B-11 48 721 ersichtlich.

Durch die Anordnung von Einzelantrieben bekommt man sehr schnelle und präzise Bewegungen einerseits, andererseits wird aber im Regelfall auch das Trägheitsmoment erhöht, da das Gewicht der Antriebe, vor allem je näher sie zur Roboterspitze hin liegen, d. h. von der ersten Drehachse des Roboters entfernt sind, an Bedeutung gewinnt.

Die Aufgabe der vorliegenden Erfindung besteht darin, eine schnelle und präzise Einzelantriebsmöglichkeit für zumindest die einzelnen Armteile zu schaffen, bei der aber gleichzeitig dafür gesorgt ist, daß das Massenträgheitsmoment, das beschleunigt und abgebremst werden muß, relativ klein gehalten wird.

Diese Aufgabe wird erfindungsgemäß durch folgende Merkmale gelöst :

c) die Antriebe der aufeinanderfolgenden Armteile sind beide im ersten Armteil senkrecht zu den Schwenkebenen liegend angeordnet, wobei

d) der dem ersten Armteil zugeordnete Antrieb mit einem Ritzel in ein fest mit dem vorhergehenden Hubteil verbundenes Zahnrad eingreift und der zweite, in einer gabelartigen Fortsetzung des ersten Armteils gelagerte Armteil über von seinem zugeordneten Antrieb bewegte Mitnehmer schwenkbar ist.

Zusätzlich kann auch noch in dem erstgenannten Armteil ein weiterer elektrischer Antrieb für nachfolgende Drehachsen vorgesehen sein, dessen Drehbewegung z. B. über ein Zahnriemengetriebe auf diese Achse übertragen wird.

Anhand eines in der Zeichnung dargestellten Ausführungsbeispiels sei die Erfindung näher beschrieben ; es zeigen :

Figur 1 eine schematische Seitenansicht des Schwenkarmroboters,

Figur 2 eine Draufsicht und

Figur 3 Details der Armteile des Schwenkarmes.

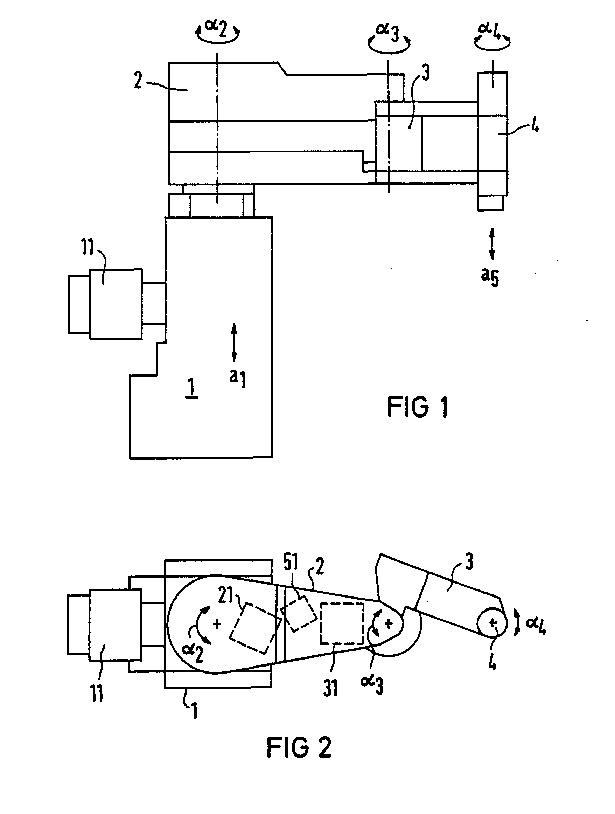

Wie aus Figur 1 ersichtlich, besteht der Horizontalroboter aus einem Hubteil 1 mit einem angeflanschten Antrieb 11. Durch diesen Hubteil 1, der gleichzeitig den Robotersockel bildet, ist der durch die beiden Armteile 2 und 3 gebildete Schwenkarm in Richtung des Doppelpfeiles a1 vertikal verschiebbar. Der Armteil 2 des Schwenkarmes ist durch einen Antrieb 21 in Richtung des Winkels α 2 um die betreffende Schwenkachse schwenkbar. Ebenso der Armteil 3 durch einen Antrieb 31 um den Winkel α 3 in der betreffenden Schwenkachse. Beide Schwenkebenen fallen in etwa zusammen.

Am vorderen Ende des Roboters findet sich noch eine Einheit 4, der eine Schwenkachse mit dem Drehwinkel α 4 und eine Hubachse zur Bewegung in Richtung des Doppelpfeiles a5 zugeordnet ist.

Wie insbesondere aus Figur 2 ersichtlich, ist dabei der zweite Armteil 3 in Art eines Winkelhebels ausgebildet, so daß er in eine annähernd parallele Lage zum Armteil 2 geschwenkt werden kann.

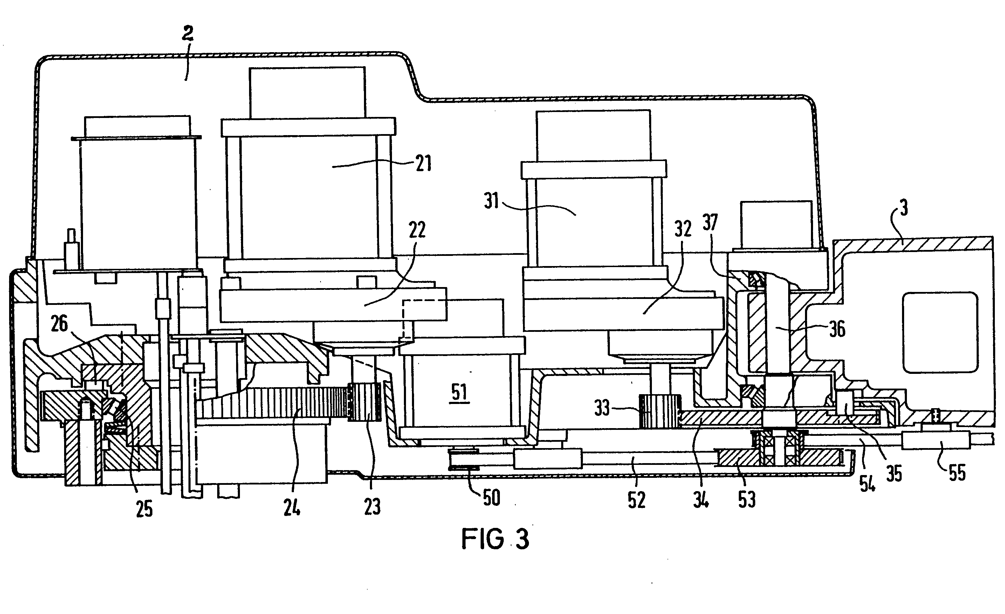

Wie aus Figur 3 ersichtlich, ist der Armteil 2 und damit auch der Armteil 3 auf dem hier nicht dargestellten Hubteil 1 mittels des Kegelrollenlagers 25 und des Nadellagers 26 schwenkbar gelagert. Mit dem Hubteil 1 ist fest ein Zahnrad 24 verbunden, in das ein Ritzel 23 eingreift, das seinerseits über Getriebe 22 vom Elektromotor 21 angetrieben wird. Auf diese Weise ist der Armteil 2 mitsamt dem Motor 21 und Getriebe 22 in der betreffenden Achse um den Winkel α 2 schwenkbar.

Im Anschluß an diesen Antrieb findet sich der Antrieb für den Armteil 3. Dieser besteht ebenfalls aus einem Elektromotor 31, der über ein Getriebe 32 und ein Ritzel 33 ein Zahnrad 34 antreibt. Dieses Zahnrad 34 nimmt über Mitnehmer 35 den Armteil 3 mit, der mit seiner Welle 36 in einer gabelartigen Fortsetzung 37 des Armteils 2 schwenkbar gelagert ist.

Fernerhin findet sich im Gehäuse des Armteiles 2 noch ein etwas kleinerer Elektromotor 51, der über ein Zahnriemengetriebe mit Rollen 50, 53 und 55 und zwei Zahnriemen 52 und 54 die Achse mit dem Winkel α 4 in der Einheit 4 antreibt.

Auf die vorstehend erwähnte Weise ist es möglich, die Antriebe relativ nahe am Drehpunkt des Roboters zu vereinen und damit das zu beschleunigende Massenträgheitsmoment relativ gering zu halten.

Ferner hat diese Konstruktion noch den Vorteil, daß die auf das erste Armteil folgenden Armteile relativ klein gebaut werden können, so daß damit auch Montage- oder sonstige Arbeitsvorgänge unter beengten Raumverhältnissen möglich sind.

## Patentansprüche

1. Industrieroboter mit Schwenkarm, bei dem

a) zwei aufeinanderfolgende Armteile (2, 3) zueinander in parallelen Horizontalebenen schwenkbar sind und

b) zum Antrieb in den einzelnen Roboterachsen Elektromotoren mit Getrieben dienen, gekennzeichnet durch folgende Merkmale :

c) die Antriebe (21, 31) der aufeinanderfolgenden Armteile (2, 3) sind im ersten Armteil senkrecht zu den Schwenkebenen liegend angeordnet,

d) der dem ersten Armteil zugeordnete Antrieb (21) greift mit einem Ritzel (23) in ein fest mit dem vorhergehenden Hubteil verbundenes Zahnrad (24) ein und

e) der in einer gabelartigen Fortsetzung des ersten Armteiles (2) gelagerte zweite Armteil (3) ist über vom zugeordneten Antrieb (31) betätigte Mitnehmer (35) schwenkbar.

2. Industrieroboter nach Anspruch 1, gekennzeichnet durch einen zusätzlich im ersten Armteil (2) angeordneten elektrischen Antrieb (51), der über ein Zahnriemengetriebe mit einer nachfolgenden Drehachse (a7) gekuppelt ist.

3. Industrieroboter nach Anspruch 1, dadurch gekennzeichnet, daß ein Armteil (3) in seiner Schwenkebene in der Art eines Winkelhebels ausgebildet ist.

## Claims

1. Industrial robot with a pivot arm in which

a) two successive arm portions (2, 3) are pivotable with respect to each other in parallel horizontal planes and

b) electric motors with gears are used for the drive in the individual robot axes, characterised by the following features :

c) the drives (21, 31) of the successive arm portions (2, 3) are arranged in the first arm portion to lie perpendicular to the pivoting planes,

d) the drive (21) associated with the first arm portion engages via a pinion (23) into a gear wheel (24) connected to the preceding lifting portion and

e) the second arm portion (3) mounted in a fork-like extension of the first arm portion (2) is pivotable by means of a driving device (35) actuated by the associated drive (31).

2. Industrial robot according to claim 1, characterised by an additional electrical drive (51) arranged in the first arm portion (2), this drive being coupled to a succeeding axis of rotation (a7) by means of a toothed belt drive.

3. Industrial robot according to claim 1, characterised in that one arm portion (3) is constructed in its pivoting plane in the manner of an angled lever.

## Revendications

1. Robot industriel comportant un bras pivotant, dans lequel

a) deux éléments successifs (2, 3) du bras peuvent pivoter l'un par rapport à l'autre dans des plans horizontaux parallèles, et

b) des moteurs électriques comportant des transmissions sont utilisés pour l'entraînement sur les différents axes du robot, caractérisé par les caractéristiques suivantes :

c) les dispositifs d'entraînement (21, 31) des éléments successifs (2, 3) du bras sont disposés dans le premier élément du bras, perpendiculairement aux plans de pivotement,

d) le dispositif d'entraînement (21) associé au premier élément du bras engrène, par un pignon (23), avec une roue dentée (24) reliée rigidement à la partie amont formant dispositif de levage, et

e) le second élément (3) du bras, qui est tourillonné dans un prolongement en forme de fourche du premier élément (2) du bras, peut être entraîné en rotation par l'intermédiaire d'un organe d'entraînement (35) actionné par le dispositif d'entraînement associé (31).

2. Robot industriel suivant la revendication 1, caractérisé par un dispositif d'entraînement électrique (51), prévu en supplément dans le premier élément (2) du bras et accouplé par l'intermédiaire d'une transmission à courroie dentée à un axe de rotation aval (a7).

3. Robot industriel suivant la revendication 1, caractérisé par le fait qu'un élément (3) du bras est conformé, dans son plan de pivotement, à la manière d'un levier coudé.

FIG 1

FIG 2

FIG 3

EP 0 198 315 B1